# FASCICULE DE BREVET EUROPEEN

(11) **EP 4 012 238 B1**
(45) Date de publication et mention de la délivrance du brevet: **12.06.2024**
(21) Numéro de dépôt: 21212022.4
(22) Date de dépôt: 02.12.2021
(51) Int. Cl.: F16K 31/08, F16K 99/00, F16K 7/12

(54) **VANNE FLUIDIQUE**
FLÜSSIGKEITSVENTIL
FLUID VALVE

(30) Priorité: 11.12.2020 FR 2013048
(43) Date de publication de la demande: 15.06.2022
(73) Titulaire: Commissariat à l'énergie atomique et aux énergies alternatives, 75015 Paris (FR)
(72) Inventeur: BAQUE, Melissa, 38054 GRENOBLE Cedex 09 (FR); ALESSIO, Manuel, 38054 GRENOBLE Cedex 09 (FR); ROUX, Jean-Maxime, 38054 GRENOBLE Cedex 09 (FR); TROUILLON, Raphaël, 38054 GRENOBLE Cedex 09 (FR)
(74) Mandataire: INNOV-GROUP

(56) Documents cités:
- FR-A1- 3 086 363
- US-A1- 2007 251 589
- US-A1- 2014 107 589
- US-A1- 2017 298 966
- US-B2- 7 338 028
- US-B2- 7 748 962
- US-B2- 8 585 013

## Description

### Domaine technique de l'invention

La présente invention se rapporte à une vanne fluidique pouvant être configurée pour fonctionner dans un mode normalement ouvert ou dans un mode normalement fermé.

### Etat de la technique

Différentes variantes de vannes fluidiques ont déjà été décrites dans l'état de la technique. Les brevets US7338028B2**,** US8585013B2 et US7748962B2 décrivent de telles vannes fluidiques, actionnables par effet magnétique en déplaçant un aimant permanent. La vanne comporte une partie métallique ou magnétique actionnable sous l'effet de l'aimant permanent. Le brevet US7338028B2 décrit plus précisément une solution qui comporte un aimant en forme de bille, actionnable en translation dans une glissière grâce à un aimant permanent d'actionnement. Dans une première position la bille vient ouvrir un circuit fluidique pour laisser passer un fluide et dans une deuxième position, la bille vient fermer le circuit fluidique, bloquant le passage du fluide.

Le brevet US7748962B2 décrit pour sa part une solution comportant une membrane flexible qui intègre une couche magnétique. La membrane est chargée de contrôler le passage d'un fluide dans un circuit fluidique. Un aimant permanent permet d'actionner la membrane entre deux positions, par effet magnétique, pour ouvrir ou fermer le circuit fluidique. Ce brevet décrit également une solution dans laquelle le support du circuit fluidique est positionné sur un plateau actionnable en rotation par rapport à l'aimant permanent. La rotation du plateau permet de mettre en regard une vanne fluidique particulière avec l'aimant permanent.

Le brevet US8585013B2 décrit une vanne fluidique présentant une membrane flexible, dans laquelle est noyée une bille métallique. Un aimant permanent permet d'attirer la bille et de déplacer la membrane, celle-ci venant alors obturer un canal fluidique.

Les demandes de brevet FR3086363A1, US2007/251589A1 et US2017/298966A1 décrivent d'autres exemples de vannes fluidiques à actionnement magnétique.

Ces différentes solutions de vanne fluidique magnétique ne sont pas forcément satisfaisantes pour les raisons suivantes :
- La solution du brevet US7338028B2 obtient l'étanchéité à la fermeture directement par la bille, ce qui peut s'avérer inefficace si les surfaces en contact ne sont pas parfaitement complémentaires et ajustées. L'étanchéité ne peut être garantie qu'à l'aide d'au moins d'un matériau qui assure la fonction de joint. Par ailleurs, les circuits micro-fluidiques peuvent être destinés à être des systèmes d'analyse jetables et doivent donc employer des matériaux les moins polluants possible. Or les aimants sont généralement constitués de terres rares comme par exemple le Néodyme et le Samarium dont il convient pour des raisons écologiques de réduire l'emploi et la dispersion.
- Les solutions du brevet US7748962B2 et de la demande US2007/251589A1 sont complexes car elles supposent la réalisation d'une membrane spécifique qui intègre une couche magnétique.
- La solution du brevet US8585013B2 nécessite aussi la réalisation d'une membrane spécifique, dans laquelle est noyée la bille. La bille peut également relarguer des inhibiteurs, susceptibles de venir interférer avec la méthode de détection.
- La solution antérieure utilise parfois une interaction magnétique pour maintenir une position (cas du document FR3086363A1).

Par ailleurs, ces vannes fluidiques connues ne peuvent pas être facilement configurées pour fonctionner dans un mode normalement fermé ou dans un mode normalement ouvert.

Le but de l'invention est de proposer une vanne fluidique ayant une architecture simple, pouvant être facilement adaptée pour fonctionner dans un mode normalement fermé ou dans un mode normalement ouvert.

L'invention se décline en deux architectures, une première architecture fonctionnant en mode normalement fermé et une deuxième architecture fonctionnant en mode normalement ouvert.

### Exposé de l'invention

Dans une première réalisation, telle que définie par la revendication indépendante 1, l'invention concerne ainsi une vanne fluidique de type normalement fermé comprenant un support, un circuit fluidique réalisé dans ledit support, une membrane déformable élastiquement entre au moins deux positions, une position dite de repos dans laquelle elle ouvre ledit circuit fluidique pour laisser passer un fluide, et une position dite déformée dans laquelle elle ferme ledit circuit fluidique pour bloquer le passage du fluide, ladite membrane étant configurée pour passer de sa position déformée à sa position de repos sous l'effet d'une force de rappel élastique, ladite vanne comportant :
- Un élément d'actionnement susceptible de se déplacer de manière indépendante de la membrane et formé d'une pièce en acier sensible à l'effet magnétique,
- Ledit élément d'actionnement étant posé sur la membrane, agencé pour venir en appui contre ladite membrane et configuré pour exercer sur la membrane une force de gravité supérieure à la force de rappel élastique de la membrane, pour placer la membrane dans la position déformée et la maintenir dans cette position sous l'unique force de gravité exercée par l'élément d'actionnement,
- Des moyens magnétiques d'actionnement, configurés pour exercer une force magnétique suffisante sur ledit élément d'actionnement pour déplacer ledit élément d'actionnement de manière suffisante et libérer la membrane, au moins partiellement, de ladite force de gravité et laisser la membrane revenir vers sa position de repos sous l'effet de sa force de rappel élastique.

Dans une deuxième réalisation, telle que définie par la revendication indépoendante 2, l'invention concerne une vanne fluidique de type normalement ouvert comprenant un support, un circuit fluidique réalisé dans ledit support, une membrane déformable élastiquement entre au moins deux positions, une position dite de repos dans laquelle elle ouvre ledit circuit fluidique pour laisser passer un fluide et une position dite déformée dans laquelle elle est amenée à se bomber pour fermer ledit circuit fluidique et bloquer le passage du fluide, ladite membrane étant configurée pour passer de sa position déformée à sa position de repos sous l'effet d'une force de rappel élastique, la vanne comportant :
- Un élément d'actionnement susceptible de se déplacer de manière indépendante de la membrane et formé d'une pièce en acier sensible à l'effet magnétique,
- Ledit élément d'actionnement étant posé sur ladite membrane, agencé pour venir en appui contre ladite membrane et configuré pour exercer sur la membrane une unique force de gravité, qui est inférieure à ladite force de rappel élastique de la membrane, laissant ouvert ledit circuit fluidique,
- Des moyens magnétiques d'actionnement, configurés pour exercer sur ledit élément d'actionnement une force magnétique suffisante, venant s'ajouter à ladite force de gravité, pour dépasser ladite force de rappel élastique et placer la membrane dans sa position déformée en vue de fermer ledit circuit fluidique.

Les deux réalisations peuvent présenter les particularités communes suivantes :
Selon une particularité, la vanne comporte des moyens de guidage en translation dudit élément d'actionnement entre deux positions.

Selon une autre particularité, l'élément d'actionnement est une bille métallique.

Selon une autre particularité, le support comporte une couche dite inférieure dans laquelle est réalisée ledit circuit fluidique et une couche dite supérieure disposée sur la couche inférieure, ladite membrane étant intercalée entre la couche inférieure et ladite couche supérieure.

Selon une autre particularité, les moyens magnétiques d'actionnement comportent un aimant permanent.

Selon une autre particularité, la membrane est réalisée en silicone.

L'invention concerne également un système fluidique comportant un support dans lequel est réalisé un circuit fluidique et plusieurs vannes fluidiques, chaque vanne fluidique est telle que définie ci-dessus en mode normalement ouvert ou fermé, le système comportant également un plateau mobile portant des moyens d'actionnement magnétiques des vannes fluidiques.

Selon une particularité, le système comporte N vannes fluidiques, avec N supérieur ou égal à 2 et en ce que les moyens d'actionnement magnétiques comportent N-1 aimants permanents.

### Brève description des figures

D'autres caractéristiques et avantages vont apparaître dans la description détaillée qui suit faite en regard des dessins annexés dans lesquels :
- La figure 1A, la figure 1B et la figure 1C représentent une vanne fluidique de type normalement fermé conforme à l'invention et illustrent son principe de fonctionnement ;
- La figure 2A, la figure 2B et la figure 2C représentent une vanne fluidique de type normalement ouvert conforme à l'invention et illustrent son principe de fonctionnement ;
- La figure 3 représente un exemple de réalisation d'un système fluidique intégrant plusieurs vannes conformes à l'invention ;

### Description détaillée d'au moins un mode de réalisation

Selon l'invention, la vanne fluidique V1, V2 comporte un support.

Le support peut être une carte fluidique 1 dans laquelle est réalisé un circuit fluidique.

La carte fluidique 1 peut être réalisée dans un matériau transparent de type COP/COC (Cyclo Oléfin Polymère/Cyclo Olefin Copolymère) ou de type PMMA (PolyMéthacrylate de Méthyle). Elle peut présenter un format type carte de crédit. Elle peut comporter plusieurs couches 10, 11 superposées.

Le circuit fluidique peut comporter un ou plusieurs canaux fluidiques, par exemple réalisés par usinage de la carte fluidique 1.

Selon l'invention, la vanne fluidique V1, V2 est chargée de contrôler l'écoulement d'un fluide dans le circuit fluidique. Une vanne fluidique, dite tout ou rien, est configurée pour laisser passer le fluide dans le circuit fluidique ou bloquer le passage du fluide dans le circuit. La vanne référencée V1 correspond à la vanne tout ou rien de type normalement fermé. La vanne référencée V2 correspond à la vanne tout ou rien de type normalement ouvert.

Le circuit fluidique peut prendre différentes configurations. De manière non limitative, il peut comporter au moins un canal 12 le long duquel est placée la vanne fluidique V1, V2, destinée à contrôler l'écoulement du fluide F à travers ce canal.

De manière non limitative, le canal 12 peut être par exemple usiné dans une couche inférieure 10 de la carte 1 puis recouvert par une couche supérieure 11.

Selon l'invention, la vanne fluidique V1, V2 comporte une membrane 2 déformable.

La membrane 2 peut être réalisée avec un polymère souple comme par exemple un silicone tel que le PDMS (Poly-Diméthyl-Siloxane).

La membrane 2 peut se présenter sous la forme d'une pastille en forme de disque, maintenue entre la couche inférieure 10 et la couche supérieure 11 de la carte. Un lamage peut être réalisé sur la couche supérieure 11, en périphérie du canal. La membrane est logée dans ledit lamage.

La membrane 2 est configurée pour se déformer entre deux positions extrêmes, une première position, dite de repos, dans laquelle elle est peu ou pas déformée, et une deuxième position dite déformée dans laquelle elle est déformée de manière plus accentuée que dans sa position de repos.

La membrane 2 est configurée pour repasser de sa position déformée à sa position de repos grâce à ses propriétés mécaniques élastiques. La membrane exerce alors une force de rappel élastique Frapp, d'intensité non nulle.

Selon un aspect particulier de l'invention, lors de sa déformation, la membrane est amenée à se bomber.

Selon l'invention, la vanne fluidique comporte également un élément d'actionnement, susceptible de se déplacer de manière indépendante de la membrane et formé d'une pièce en acier sensible à l'effet magnétique.

Cet élément d'actionnement peut être formé d'une bille, un cylindre, un cube ou un élément de toute autre forme. Pour des questions de simplicité, de manière avantageuse, cet élément d'actionnement présente des propriétés de symétrie. Dans la suite de la description et sur les figures, de manière non limitative, l'élément d'actionnement est représenté sous la forme d'une bille métallique 3.

Dans la vanne V1, V2, la bille 3 est agencée pour venir se poser sur la membrane, exerçant sa force de gravité Pb sur la membrane 2 lorsque la carte est positionnée à l'horizontale. Il faut noter que la bille 3 n'est pas intégrée dans la membrane comme dans l'état de la technique et qu'elle peut donc prendre une position dans laquelle elle libère la membrane 2 de toute contrainte de gravité. Par le terme "poser" on entend que la bille 3 est susceptible de venir en appui contre une surface de la membrane, mais qu'elle est susceptible de se déplacer de manière indépendante de la membrane, permettant ainsi de décorréler le mouvement de la membrane 2 de celui de la bille 3.

De manière avantageuse, la vanne V1, V2 peut comporter des moyens de guidage 30 en translation de la bille 3, agencés pour permettre à la bille 3 de prendre au moins deux positions. La direction de translation de la bille 3 est parallèle à la direction de la force de gravité exercée par la bille 3 sur la membrane 2. Ces moyens de guidage 30 peuvent consister en une cavité ayant une section adaptée à la taille de la bille, et une hauteur suffisante pour, dans une première position, appuyer sur la membrane pour la placer dans sa position déformée et, dans une deuxième position, libérer au moins partiellement la membrane de la force de gravité exercée par la bille, et lui permettre de revenir vers sa position de repos.

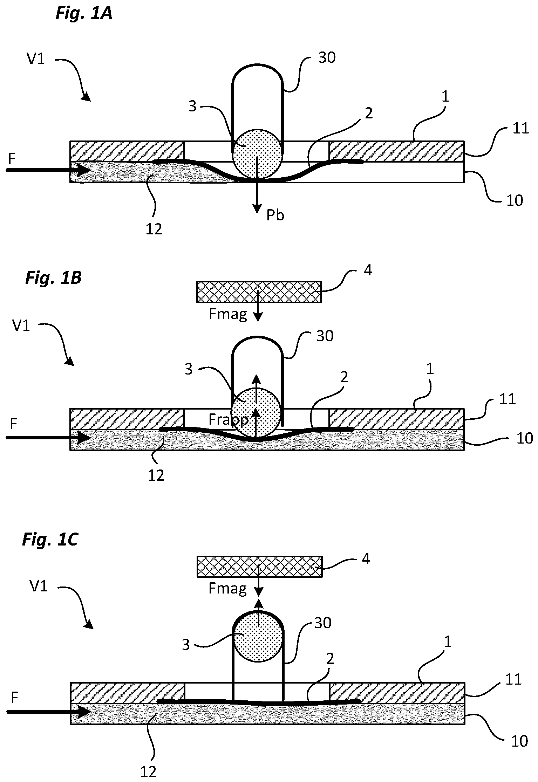

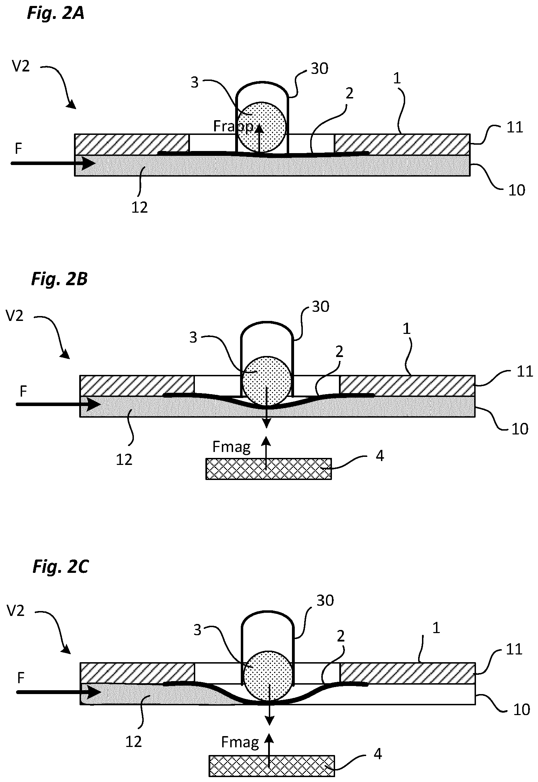

Selon l'invention, la masse de la bille et donc son poids Pb sont utilisés pour configurer la vanne dans un mode normalement fermé (vanne V1-figures 1A à 1C) ou dans un mode normalement ouvert (vanne V2-figures 2A à 2C).

La vanne fluidique comporte également des moyens magnétiques d'actionnement. Ces moyens magnétiques d'actionnement comportent avantageusement un aimant permanent 4. Une solution utilisant un électroaimant pourrait aussi être envisagée.

L'aimant permanent 4 peut être amené à proximité de l'élément d'actionnement, par exemple la bille 3, pour exercer une force magnétique Fmag sur la bille 3. Dans la configuration avec une bille métallique, la force magnétique est une force d'attraction.

Dans le cas d'une vanne V1 de type normalement fermé, l'aimant permanent 4 est approché du même côté que la bille par rapport à la membrane 2, pour exercer la force d'attraction magnétique sur la bille 3. Dans le cas d'une vanne V2 de type normalement ouvert, l'aimant permanent 4 est approché de l'autre côté de la bille par rapport à la membrane 2, pour exercer sa force d'attraction magnétique sur la bille 3.

### Vanne de type normalement fermé

Dans le mode normalement fermé, la bille 3 est choisie avec une masse M1 déterminée, de manière à exercer une force de gravité Pb qui est supérieure à la force de rappel élastique Frapp de la membrane 2, appuyant ainsi alors suffisamment sur la membrane 2 pour la déformer et la placer initialement en position déformée, sans autre force extérieure (figure 1A).

La force de gravité Pb seule exercée par la bille 3 est ainsi suffisante pour placer la membrane 2 dans sa position déformée. Le canal fluidique 12 est donc fermé, la vanne V1 bloquant le passage du fluide F.

Pour ouvrir le canal fluidique, l'aimant permanent 4 est approché de la bille 3 pour exercer une force d'attraction magnétique Fmag sur la bille 3 en vue de déplacer la bille 3 vers sa deuxième position. Lorsqu'une force d'attraction magnétique suffisante est exercée sur la bille 3 par l'aimant permanent, la force de rappel élastique Frapp exercée par la membrane 2 sur la bille devient supérieure à la somme vectorielle de la force de gravité Pb exercée par la bille 3 sur la membrane 2 et de la force d'attraction magnétique Fmag, entraînant le retour de la membrane 2 vers sa position de repos (figure 1 B).

Lorsque la membrane 2 est entièrement libérée de la force de gravité Pb de la bille, la membrane est dans sa position de repos (figure 1C).

Le canal fluidique est donc ouvert, la vanne V1 laissant passer le fluide F.

### Vanne de type normalement ouvert

Dans le mode normalement ouvert, la bille 3 est choisie avec une masse M2 déterminée (M2 étant inférieur à M1 si la membrane de la vanne V2 présente les mêmes caractéristiques mécaniques que celle de la vanne V1), de manière à exercer une force de gravité Pb qui est inférieure ou égale à la force de rappel élastique Frapp de la membrane 2. Sans effet magnétique sur la bille ou autre action extérieure, la membrane 2 est donc initialement dans sa position de repos (figure 2A). Le canal fluidique 12 est ouvert, la vanne V2 laissant passer le fluide F.

Dans cette réalisation, comme dans la réalisation précédente, la membrane est soumise à la seule force de gravité exercée par la bille, cette force étant cependant inférieure à la force de rappel élastique Frapp de la membrane 2.

Pour fermer le canal fluidique 12, l'aimant permanent 4 est approché de la bille 3 pour exercer une force d'attraction magnétique suffisante pour entraîner la bille 3 vers le canal à fermer.

Sous l'effet de la force d'attraction magnétique Fmag, la bille 3 vient alors appuyer sur la membrane 2, en s'ajoutant à la force de gravité exercée Pb par la bille 3 sur la membrane 2 lorsque la membrane est située sous la bille. Si la carte fluidique 1 est placée à la verticale de telle façon que la membrane se trouve à la verticale, le poids de la bille n'exercerait alors aucune force Pb susceptible de déformer la membrane.

Lorsque la somme de la force d'attraction magnétique Fmag exercée sur la bille et de la force de gravité Pb1 devient supérieure à la force de rappel élastique Frapp de la membrane, la membrane se déforme (figure 2B).

Lorsque la force d'attraction magnétique Fmag exercée sur la bille 3 par l'aimant permanent 4 devient suffisante, la membrane 2 est maintenue dans sa position déformée (figure 2C). Le canal fluidique 12 est donc fermé, la vanne V2 bloquant le passage du fluide F.

Lorsque la force d'attraction magnétique exercée par l'aimant permanent disparaît, la force de rappel élastique Frapp prévue pour être supérieure à la force de gravité éventuellement exercée par la bille 3 lorsque celle-ci est située au-dessus de la membrane, permet à la membrane 2 de revenir vers sa position de repos pour ouvrir le canal fluidique 12 et laisser passer le fluide F.

Un système fluidique, par exemple une carte fluidique, peut comporter plusieurs vannes fluidiques du type de l'invention, réparties sur son circuit fluidique.

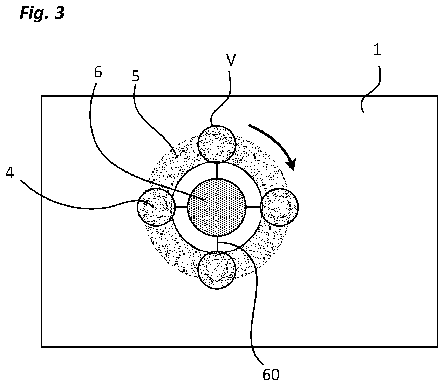

En référence à la figure 3, une solution commune d'actionnement peut être employée pour commander chaque vanne fluidique de la carte. Cette solution commune peut consister en un plateau 5 mobile, par exemple rotatif, portant des moyens magnétiques d'actionnement. Le plateau 5 peut être positionné sous la carte fluidique 1. Les moyens magnétiques d'actionnement peuvent comporter un ou plusieurs aimants permanents. A titre d'exemple, pour une carte ayant N vannes fluidiques conformes à l'invention (avec N supérieur ou égal à 2), le plateau peut porter N-1 aimant permanents. Selon la position angulaire prise par le plateau 5 autour de son axe de rotation, chaque aimant permanent 4 peut être mis en regard d'une vanne fluidique V distincte. Un réservoir 6 de liquide présent sur la carte fluidique peut par exemple contenir un fluide F à délivrer dans plusieurs branches 60 distinctes, chaque branche étant contrôlée par une vanne fluidique V distincte.

Bien entendu, différentes configurations peuvent être envisagées en fonction du circuit fluidique à commander. La configuration peut être adaptée en employant des vannes V de type normalement fermé (V1) ou de type normalement ouvert (V2) comme décrite ci-dessus. Le fluide F est amené à circuler dans chaque branche 60 dont la vanne fluidique V est ouverte.

L'invention consiste ainsi en une architecture de vanne simple, facile à fabriquer et à configurer en mode normalement ouvert ou normalement fermé.

## Revendications

1. Vanne fluidique (V1) de type normalement fermé comprenant un support, un circuit fluidique réalisé dans ledit support, une membrane (2) déformable élastiquement entre au moins deux positions, une position dite de repos dans laquelle elle ouvre ledit circuit fluidique pour laisser passer un fluide, et une position dite déformée dans laquelle elle ferme ledit circuit fluidique pour bloquer le passage du fluide, ladite membrane (2) étant configurée pour passer de sa position déformée à sa position de repos sous l'effet d'une force de rappel élastique (Frapp), **caractérisée en ce qu'**elle comporte :
- Un élément d'actionnement susceptible de se déplacer de manière indépendante de la membrane (2) et formé d'une pièce en acier sensible à l'effet magnétique,
- Ledit élément d'actionnement étant posé sur la membrane, agencé pour venir en appui contre ladite membrane (2) et configuré pour exercer sur la membrane une force de gravité (Pb) supérieure à la force de rappel élastique (Frapp) de la membrane, pour placer la membrane dans la position déformée et la maintenir dans cette position sous l'unique force de gravité exercée par l'élément d'actionnement,
- Des moyens magnétiques d'actionnement, configurés pour exercer une force magnétique (Fmag) suffisante sur ledit élément d'actionnement pour déplacer ledit élément d'actionnement de manière suffisante et libérer la membrane (2), au moins partiellement, de ladite force de gravité (Pb) et laisser la membrane (2) revenir vers sa position de repos sous l'effet de sa force de rappel élastique (Frapp).

2. Vanne fluidique (V2) de type normalement ouvert comprenant un support, un circuit fluidique réalisé dans ledit support, une membrane (2) déformable élastiquement entre au moins deux positions, une position dite de repos dans laquelle elle ouvre ledit circuit fluidique pour laisser passer un fluide et une position dite déformée dans laquelle elle est amenée à se bomber pour fermer ledit circuit fluidique et bloquer le passage du fluide, ladite membrane (2) étant configurée pour passer de sa position déformée à sa position de repos sous l'effet d'une force de rappel élastique (Frapp), **caractérisée en ce qu'**elle comporte :
- Un élément d'actionnement susceptible de se déplacer de manière indépendante de la membrane (2) et formé d'une pièce en acier sensible à l'effet magnétique,
- Ledit élément d'actionnement étant posé sur ladite membrane, agencé pour venir en appui contre ladite membrane (2) et configuré pour exercer sur la membrane une unique force de gravité (Pb), qui est inférieure à ladite force de rappel élastique (Frapp) de la membrane, laissant ouvert ledit circuit fluidique,
- Des moyens magnétiques d'actionnement, configurés pour exercer sur ledit élément d'actionnement une force magnétique (Fmag) suffisante, venant s'ajouter à ladite force de gravité (Pb), pour dépasser ladite force de rappel élastique (Frapp) et placer la membrane (2) dans sa position déformée en vue de fermer ledit circuit fluidique.

3. Vanne fluidique selon la revendication 1 ou 2, **caractérisée en ce qu'**elle comporte des moyens de guidage (30) en translation dudit élément d'actionnement entre deux positions.

4. Vanne fluidique selon la revendication 3, **caractérisé en ce que** l'élément d'actionnement est une bille métallique (3).

5. Vanne fluidique selon l'une des revendications 3 ou 4, **caractérisée en ce que** le support comporte une couche dite inférieure (10) dans laquelle est réalisée ledit circuit fluidique et une couche dite supérieure (11) disposée sur la couche inférieure, ladite membrane (2) étant intercalée entre la couche inférieure et ladite couche supérieure.

6. Vanne fluidique selon l'une des revendications 1 à 5, **caractérisée en ce que** les moyens magnétiques d'actionnement comportent un aimant permanent (4).

7. Vanne fluidique selon l'une des revendications 1 à 6, **caractérisée en ce que** la membrane (2) est réalisée en silicone.

8. Système fluidique comportant un support dans lequel est réalisé un circuit fluidique et plusieurs vannes fluidiques (V), **caractérisé en ce que** chaque vanne fluidique est tel que définie dans l'une des revendications 1 à 7, et **en ce que** le système comporte également un plateau mobile (5) portant des moyens d'actionnement magnétiques des vannes fluidiques.

9. Système selon la revendication 8, **caractérisé en ce qu'**il comporte N vannes fluidiques, avec N supérieur ou égal à 2 et **en ce que** les moyens d'actionnement magnétiques comportent N-1 aimants permanents (4).

## Patentansprüche

1. Flüssigkeitsventil (V1) vom Typ Öffner mit einem Träger, einem in dem Träger realisierten Flüssigkeitskreis, einer Membran (2), die zwischen mindestens zwei Stellungen elastisch verformbar ist, einer sogenannten Ruhestellung, in der sie den Flüssigkeitskreis öffnet, um eine Flüssigkeit durchzulassen, und einer sogenannten verformten Stellung, in der sie den Flüssigkeitskreis schließt, um den Durchgang der Flüssigkeit zu blockieren, wobei die Membran (2) so konfiguriert ist, dass sie unter der Wirkung einer elastischen Rückstellkraft (Frapp) von ihrer verformten Stellung in ihre Ruhestellung übergeht, **dadurch gekennzeichnet, dass** es Folgendes aufweist:
- ein Betätigungselement, das sich unabhängig von der Membran (2) bewegen kann und aus einem Stahlteil besteht, das auf Magnetismus anspricht,
- wobei das Betätigungselement auf der Membran aufliegt und so angeordnet ist, dass es an der Membran (2) anliegt, und so konfiguriert ist, dass es auf die Membran eine Schwerkraft (Pb) ausübt, die größer ist als die elastische Rückstellkraft (Frapp) der Membran, um die Membran in die verformte Stellung zu bringen und sie in dieser Stellung ausschließlich über die Schwerkraft zu halten, die durch das Betätigungselement ausgeübt wird,
- magnetische Mittel zur Betätigung, die so konfiguriert sind, dass sie eine ausreichende Magnetkraft (Fmag) auf das Betätigungselement ausüben, um das Betätigungselement ausreichend zu bewegen und die Membran (2) zumindest teilweise von der Schwerkraft (Pb) zu befreien und die Membran (2) unter der Wirkung ihrer elastischen Rückstellkraft (Frapp) in ihre Ruhestellung zurückkehren zu lassen.

2. Flüssigkeitsventil (V2) vom Typ Schließer mit einem Träger, einem in dem Träger realisierten Flüssigkeitskreis, einer Membran (2), die zwischen mindestens zwei Stellungen elastisch verformbar ist, einer sogenannten Ruhestellung, in der sie den Flüssigkeitskreis öffnet, um eine Flüssigkeit durchzulassen, und einer sogenannten verformten Stellung, in der sie dazu gebracht wird, sich zu wölben, um den Flüssigkeitskreis zu schließen und den Durchgang der Flüssigkeit zu blockieren, wobei die Membran (2) so konfiguriert ist, dass sie unter der Wirkung einer elastischen Rückstellkraft (Frapp) von ihrer verformten Stellung in ihre Ruhestellung übergeht, **dadurch gekennzeichnet, dass** es Folgendes aufweist:
- ein Betätigungselement, das sich unabhängig von der Membran (2) bewegen kann und aus einem Stahlteil besteht, das auf Magnetismus anspricht,
- wobei das Betätigungselement auf der Membran aufliegt und so angeordnet ist, dass es an der Membran (2) anliegt, und so konfiguriert ist, dass es auf die Membran eine ausschließliche Schwerkraft (Pb) ausübt, die geringer ist als die elastische Rückstellkraft (Frapp) der Membran, wodurch der Flüssigkeitskreis offen bleibt,
- magnetische Mittel zur Betätigung, die so konfiguriert sind, dass sie eine ausreichende Magnetkraft (Fmag) auf das Betätigungselement ausüben, die zu der Schwerkraft (Pb) hinzukommt, um die elastische Rückstellkraft (Frapp) zu übersteigen und die Membran (2) in ihre verformte Stellung zu bringen, um den Flüssigkeitskreis zu schließen.

3. Flüssigkeitsventil nach Anspruch 1 oder 2, **dadurch gekennzeichnet, dass** es Mittel zur translatorischen Führung (30) des Betätigungselements zwischen zwei Stellungen aufweist.

4. Flüssigkeitsventil nach Anspruch 3, **dadurch gekennzeichnet, dass** das Betätigungselement eine Metallkugel (3) ist.

5. Flüssigkeitsventil nach einem der Ansprüche 3 oder 4, **dadurch gekennzeichnet, dass** der Träger eine sogenannte untere Schicht (10) aufweist, in der der Flüssigkeitskreis realisiert ist, und eine sogenannte obere Schicht (11), die auf der unteren Schicht angeordnet ist, wobei die Membran (2) zwischen der unteren Schicht und der oberen Schicht angeordnet ist.

6. Flüssigkeitsventil nach einem der Ansprüche 1 bis 5, **dadurch gekennzeichnet, dass** die magnetischen Mittel zur Betätigung einen Permanentmagneten (4) aufweisen.

7. Flüssigkeitsventil nach einem der Ansprüche 1 bis 6, **dadurch gekennzeichnet, dass** die Membran (2) aus Silikon hergestellt ist.

8. Flüssigkeitssystem mit einem Träger, in dem ein Flüssigkeitskreis realisiert ist, und mehreren Flüssigkeitsventilen (V), **dadurch gekennzeichnet, dass** jedes Flüssigkeitsventil wie in einem der Ansprüche 1 bis 7 definiert ist, und dass das System darüber hinaus eine bewegliche Platte (5) aufweist, die magnetische Mittel zur Betätigung der Flüssigkeitsventile trägt.

9. System nach Anspruch 8, **dadurch gekennzeichnet, dass** es N Flüssigkeitsventile aufweist, wobei N größer oder gleich 2 ist, und dass die magnetischen Mittel zur Betätigung N-1 Permanentmagnete (4) aufweisen.

## Claims

1. Fluidic valve (V1) of the normally closed type comprising a support, a fluidic circuit produced in said support, a membrane (2) that is elastically deformable between at least two positions, a position referred to as rest position in which it opens said fluidic circuit so as to let a fluid pass, and a position referred to as deformed position in which it closes said fluidic circuit so as to block the passage of the fluid, said membrane (2) being configured to pass from its deformed position to its rest position under the effect of an elastic return force (Frapp), **characterized in that** it has:
- an actuation element that is able to move independently of the membrane (2) and formed of a piece made of steel sensitive to the magnetic effect,
- said actuation element being laid on the membrane, arranged to bear against said membrane (2) and configured to exert on the membrane a force of gravity (Pb) greater than the elastic return force (Frapp) of the membrane, so as to place the membrane in the deformed position and keep it in this position under only the force of gravity exerted by the actuation element,
- magnetic actuation means, configured to exert a sufficient magnetic force (Fmag) on said actuation element to move said actuation element sufficiently and release the membrane (2), at least partially, from said force of gravity (Pb) and let the membrane (2) return to its rest position under the effect of its elastic return force (Frapp).

2. Fluidic valve (V2) of the normally open type comprising a support, a fluidic circuit produced in said support, a membrane (2) that is elastically deformable between at least two positions, a position referred to as rest position in which it opens said fluidic circuit so as to let a fluid pass, and a position referred to as deformed position in which it is made to dome so as to close said fluidic circuit and block the passage of the fluid, said membrane (2) being configured to pass from its deformed position to its rest position under the effect of an elastic return force (Frapp), **characterized in that** it has:
- an actuation element that is able to move independently of the membrane (2) and formed of a piece made of steel sensitive to the magnetic effect,
- said actuation element being laid on said membrane, arranged to bear against said membrane (2) and configured to exert on the membrane only a force of gravity (Pb), which is less than said elastic return force (Frapp) of the membrane, leaving said fluidic circuit open,
- magnetic actuation means, configured to exert on said actuation element a sufficient magnetic force (Fmag), added to said force of gravity (Pb), to exceed said elastic return force (Frapp) and place the membrane (2) in its deformed position in order to close said fluidic circuit.

3. Fluidic valve according to Claim 1 or 2, **characterized in that** it has means (30) for guiding said actuation element in translation between two positions.

4. Fluidic valve according to Claim 3, **characterized in that** the actuation element is a metal ball (3).

5. Fluidic valve according to either of Claims 3 and 4, **characterized in that** the support has a layer referred to as lower layer (10) in which said fluidic circuit is produced and a layer referred to as upper layer (11) disposed on the lower layer, said membrane (2) being interposed between the lower layer and said upper layer.

6. Fluidic valve according to one of Claims 1 to 5, **characterized in that** the magnetic actuation means have a permanent magnet (4).

7. Fluidic valve according to one of Claims 1 to 6, **characterized in that** the membrane (2) is made of silicone.

8. Fluidic system having a support in which a fluidic circuit is produced and a plurality of fluidic valves (V), **characterized in that** each fluidic valve is as defined in one of Claims 1 to 7, and **in that** the system also has a mobile plate (5) bearing magnetic actuation means of the fluidic valves.

9. System according to Claim 8, **characterized in that** it has N fluidic valves, with N greater than or equal to 2, and **in that** the magnetic actuation means have N-1 permanent magnets (4).
